# EUROPEAN PATENT SPECIFICATION

(11) **EP 0 736 433 B1**
(45) Date of publication and mention of the grant of the patent: **07.07.1999**
(21) Application number: 96302358.5
(22) Date of filing: 03.04.1996
(51) Int. Cl.: B61B 10/02, E01B 25/24

(54) **Power and free conveying system**
Hängefördersystem
Système pour transporteur aérien

(30) Priority: 06.04.1995 US 418214
(43) Date of publication of application: 09.10.1996
(73) Proprietor: FORD MOTOR COMPANY LIMITED, Brentwood Essex (GB); FORD-WERKE AKTIENGESELLSCHAFT, 50735 Köln (DE); FORD MOTOR COMPANY, Dearborn, MI 48121 (US)
(72) Inventor: Harris, Hugh, Trinidad, Colorado 81082 (US)
(74) Representative: Messulam, Alec Moses

(56) References cited:
- GB-A- 1 256 186
- US-A- 2 973 721
- US-A- 3 830 165
- US-A- 4 635 558
- US-A- 5 400 717

## Description

The present invention relates generally to conveying systems and, more specifically, to a power and free conveying system.

It is known to provide power and free conveyors in automotive assembly buildings for allowing assembly of automotive vehicles. Typically, a power and free conveying system includes a power track, a free track, a power trolley supported on the power track for movement therealong and a free trolley to support a load on the free track. The power trolley is typically chain driven and engages and disengages the free trolley to move the free trolley along the free track from one assembly station to another. Various power and free conveyor manufacturers have their own unique standard design. These standard designs are not compatible with one another and each conveyor manufacturer has its own strengths and weaknesses. Due to the lack of standardisation between conveyor manufacturers, parts from one power and free conveyor cannot be used on another power and free conveyor. As a result, there is a need in the art to provide a power and free conveyor which is modular in nature, thereby reducing cost, labour, field installation and start-up time.

The specification of US-A-3 830 165 describes a power-and-free conveyor system which has a load trolley track formed of two parallel spaced channel-form parts opening towards each other. Load trolleys running along the track have vertical side plates releasably interconnected by horizontal nut-and-bolt or pin-and-circlip connections. Each plate carries two rollers rolling in the track. The trolleys are made removable from the track by ease of disassembly of the components of the trolleys.

The specification of US-A-4 635 558 describes a reinforced track section for a power-and-free conveyor system which utilizes an I beam power rail and a free trolley track suspended from the I beam. A rail cap is attached above the power rail so as to provide an uninterrupted reinforcement to the power rail. The rail cap includes a continuous mounting flange which co-operates with hanger clamps to suspend the conveyer system at selectable points along the flange.

Accordingly, the present invention is a power and free conveying system including a track assembly having a power track and a free track spaced vertically from the power track, according to claim 1. The power and free conveying system also includes a power trolley supported on the power track for movement therealong and a free trolley supported on the free track for movement therealong. The track assembly includes a C-shaped first side support member having an upper transverse end connected to the power track and a lower transverse end connected to the free track. The track assembly also includes a C-shaped second side support member opposite and spaced from the first side support member having an upper transverse end connected to the power track and a lower transverse end connected to the free track.

A prefered embodiment of the present invention is that the power and free conveying system is modular in nature and allows the reuse of parts from one site to another or from one system in a building to another system in the building. The power and free conveying system's modular design greatly reduces cost, time and labour required for field installation and start-up. The power and free conveying system's modular design increases ease of installation, reliability and standardisation. Still another feature of the present invention is that the power and free conveying system has a novel track assembly, pusher dogs, chain transfers and trolleys which overcome weaknesses in existing power and free conveyors. The free trolley has increased dog bite for more positive engagement with the chain, longer wheelbase for improved trolley stability and removable side guide rollers for ease of maintenance. The track assembly has a torsionally stiff guard support member on top of the track to prevent rail twist, common rails on both power and free tracks, and bolted track splices to eliminate field welding and reduce installation time. The track assembly is able to span 7.6 metres (twenty-five feet) without additional support and has double the carrying capacity of existing conveyors.

The invention will now be described, by way of example, with reference to the accompanying drawings, in which:
FIG. 1 is a plan view of a power and free conveying system, according to the present invention, illustrated in a bay of a building;
FIG. 2 is an enlarged front view of a portion of the power and free conveying system of FIG. 1;
FIG. 3 is an enlarged fragmentary front view of a portion of the power and free conveying system of FIG. 1;
FIG. 4 is a side view of the portion of the power and free conveying system of FIG. 3;
FIG. 5 is a plan view of a transfer mechanism of the power and free conveying system of FIG. 1;
FIG. 6 is a sectional view taken along line 6-6 of FIG. 5;
FIG. 7 is a sectional view taken along line 7-7 of FIG. 5;
FIG. 8 is a fragmentary front view of a portion of the power and free conveying system of FIG. 1 illustrating two trolleys before engagement; and
FIG. 9 is a view similar to FIG. 8 illustrating the two trolleys after engagement.

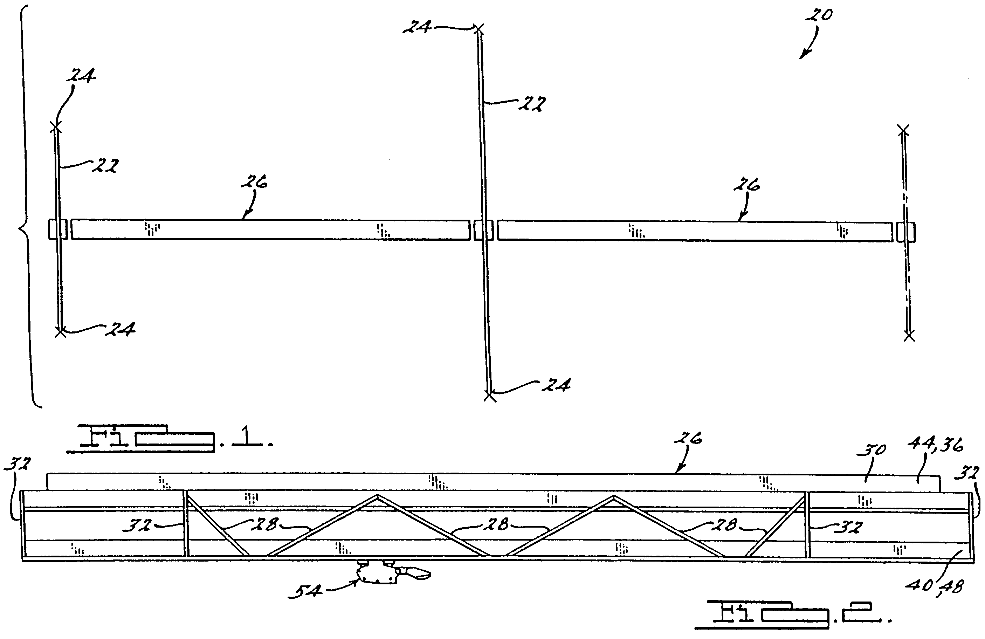

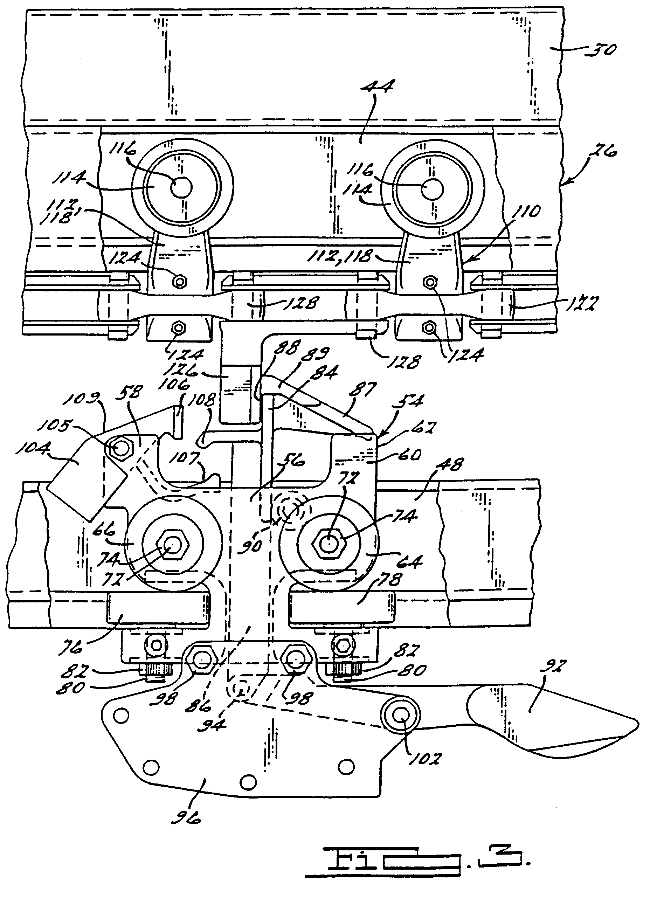

Referring to the drawings and in particular to FIGS. 1 and 2, a power and free conveying system 20, according to the present invention, is illustrated in overhead relationship in a bay of a building. The power and free conveying system 20 may be supported in a typical 12.2 metres (forty feet) bay by two (2) headers 22 and four (4) hangers 24. It should be appreciated that only a portion of the power and free conveying system 10 is illustrated in FIG. 1.

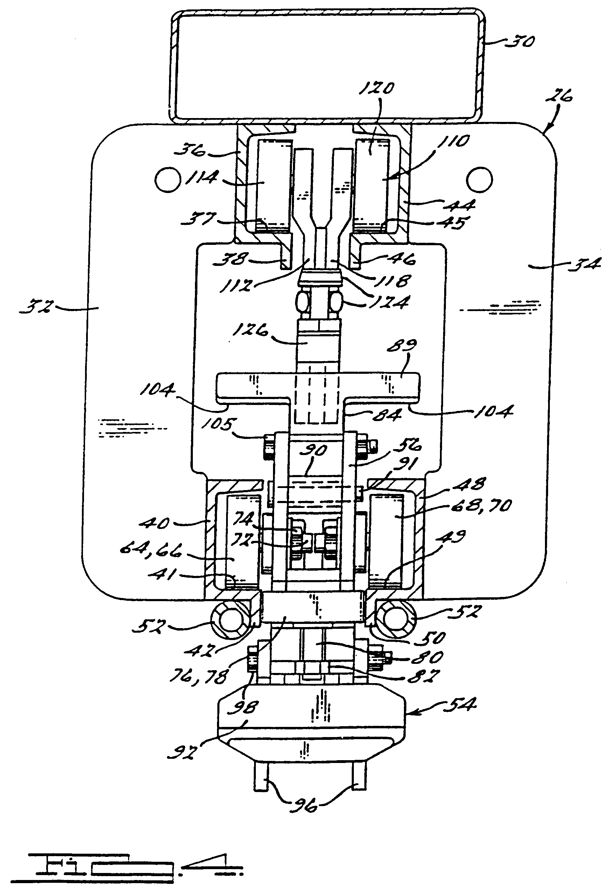

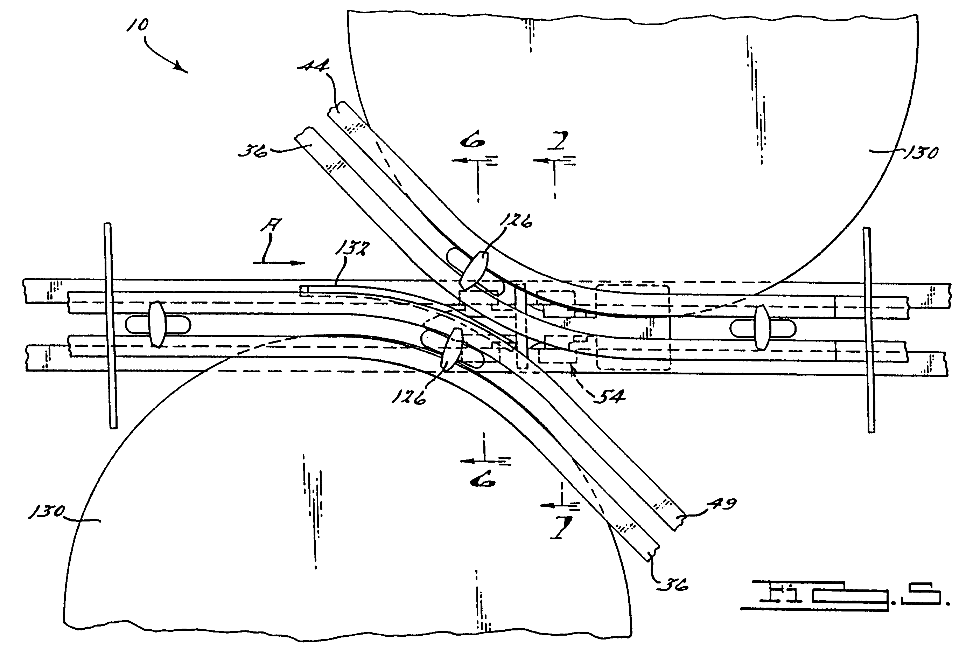

The power and free conveying system 20 includes a track assembly, generally indicated at 26, supported between the headers 22. The track assembly 26 includes a plurality of track yokes 28 installed on diagonals to form a truss to allow the track assembly 26 to span up to 7.6 metres (twenty-five) feet between the headers 22 overhead in the bay. As illustrated in FIGS. 2 through 4, the track assembly 26 also includes an upper guard support member 30 secured to the headers 22 by suitable means such as welding. The guard support member 30 is tubular and generally rectangular in cross-section. The guard support member 30 is torsionally stiff to prevent track or rail twist and eliminate additional supports.

The track assembly 26 further includes at least one, preferably a plurality of first side support members 32 disposed along and secured to the upper support member 30. The first side support member 32 has a generally C-shaped cross-section and is secured to the guard support member 30 by suitable means such as welding. The track assembly 26 includes at least one, preferably a plurality of second side support member 34 spaced transversely from the first side support member 32 and disposed along and secured to the upper support member 30 opposite the first side support member 32. The second side support member 34 has a generally C-shaped cross-section and is secured to the guard support member 30 by suitable means such as welding. It should be appreciated that the track yokes 28 have a vertically orientated first and second side support member 32 and 34 at each end of the truss formed by the track yokes 28.

The first side support member 32 includes a first or upper power track member or rail 36 at a transverse end of an upper portion thereof. The upper power track member 36 has a generally C-shaped cross-section with a flat interior wheel engaging or track surface 37 on a lower portion thereof for engagement by power trolley wheels 114 to be described. The first power track member 36 also has a downstanding flange 38 at a transverse end of the lower portion thereof. The first side support member 32 also includes a first or lower free track member 40 at a transverse end of a lower portion thereof. The first free track member 40 has a generally C-shaped cross-section with a flat interior wheel engaging or track surface 41 on a lower portion thereof for engagement by free trolley wheels 64,66 to be described. The first free track member 40 also has a downstanding flange 42 at a transverse end of the lower portion thereof.

The second side support member 34 includes a second or upper power track member 44 at a transverse end of an upper portion thereof and spaced transversely from the first power track member 36. The second power track member 44 has a generally C-shaped cross-section with a flat interior wheel engaging or track surface 45 on a lower portion thereof for engagement by power trolley wheels 120 to be described. The second power track member 44 also has a downstanding flange 46 at a transverse end of the lower portion thereof. The second side support member 34 also includes a second or lower free track member 48 at a transverse end of a lower portion thereof and spaced transversely from the first free track member 40. The second free track member 48 has a generally C-shaped cross-section with a flat interior wheel engaging or track surface 49 on the lower portion thereof for engagement by free trolley wheels 68,70 to be described. The second free track member 48 also has a downstanding flange 50 at a transverse end of the lower portion thereof. It should be appreciated that the width of the free track is greater than the width of the power track for increased stability and that the track members 36,40,44,48 may be interchangeable.

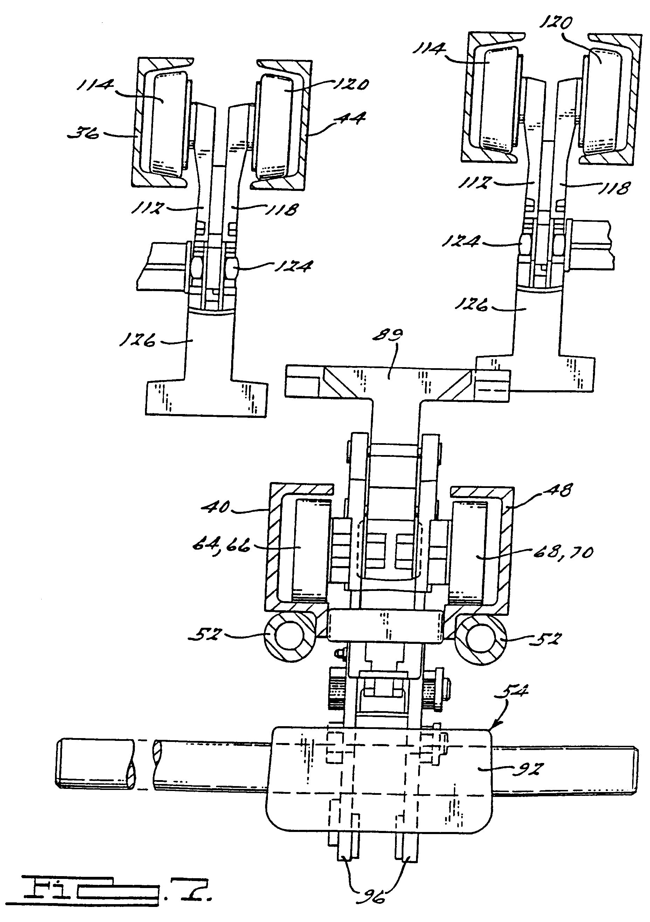

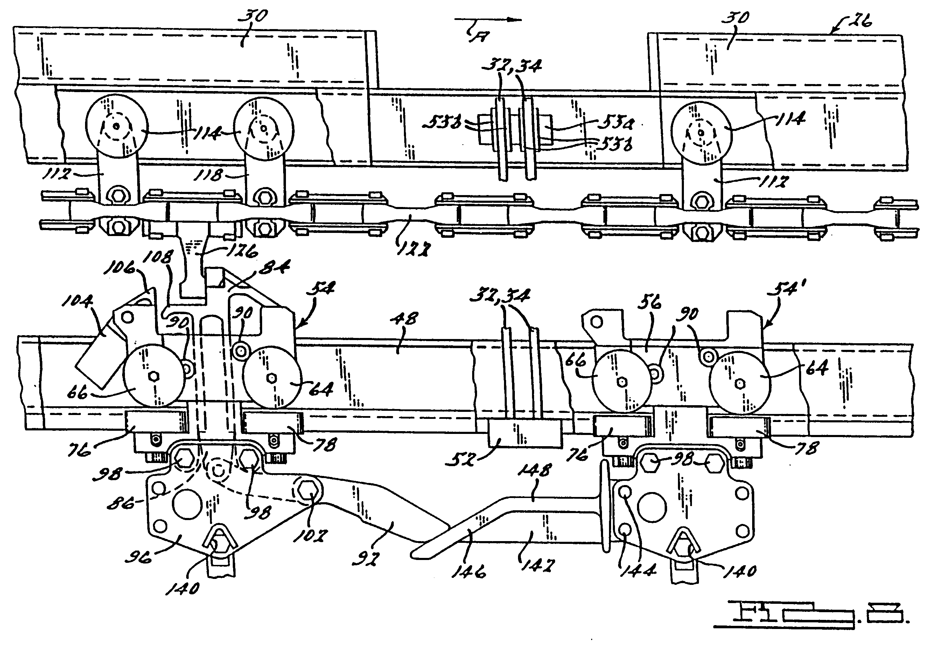

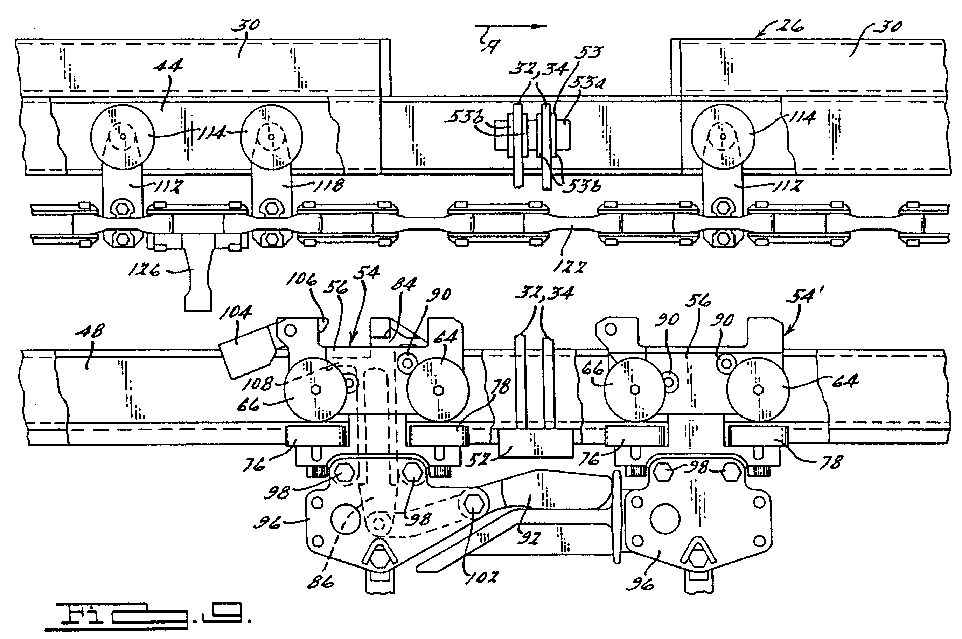

The track assembly 26 further includes track splices 52 to splice together pairs of sections thereof as illustrated in FIGS. 8 and 9. The track splices 52 are tubular and extend longitudinally. The track splices 52 are disposed beneath and abut the lower portion of each free track member 40,48 and the downstanding flange 42,50. The track splices 52 are secured to the first and second side support members 32 and 34 by fasteners 53 such as bolts 53a and nuts 53b. It should be appreciated that the track splices 52 eliminate field welding and reduce installation time.

The power and free conveying system 10 also includes at least one, preferably a plurality of free trolleys, generally indicated at 54, for movement along the track assembly 26. The free trolley 54 has a trolley body 56 with transversely spaced first upstanding projections 58 and second upstanding projections 60 spaced longitudinally from the first upstanding projection 58 at an upper end thereof. The second upstanding projection 60 has a forward surface 62 fixed relative to the trolley body 56 for engagement with a stop blade (not shown).

The free trolley 54 includes forward and rear first free trolley wheels 64 and 66, respectively, for engaging the first free track member 40 and forward and rear second free trolley wheels 68 and 70 respectively, for engaging the second free track member 48. Each of the trolley wheels 64,66, and 68,70 has a flat face to engage the track surfaces 41 and 49, respectively, and eliminate track spreading forces. Each of the free trolley wheels 64,66,68,70 are of the ball bearing type having a shaft 72 extending transversely through the trolley body 56 and secured thereto by nuts 74. It should be appreciated that any suitable means may be used to secure the free trolley wheels 64,66,68,70 to the trolley body 56. It should also be appreciated that the free trolley wheels 64,66,68,70 are easily removable from the free trolley 54.

The free trolley 54 may include forward and rear side guide rollers 76 and 78 disposed between the downstanding flanges 42 and 50 for engaging the downstanding flanges 42 and 50 of the first and second free track members 40 and 48, respectively. Each of the side guide rollers 76,78 are of the ball bearing type having a shaft 80 extending downwardly through the trolley body 56 and secured thereto by nuts 82. It should be appreciated that the side guide rollers 76,78 are removable for ease of maintenance.

The free trolley 54 also includes a retractable dog 84 having a leg portion 86 extending downwardly through the trolley body 56. The retractable dog 84 has a cam face 87 and shoulder face 88 to engage a cam down bar 132 and chain pusher dog 126, respectively, to be described. The retractable dog 84 also has a dog portion 89 extending transversely a predetermined width for increased dog bite. It should be appreciated that the dog portion 89 is sufficiently wide to eliminate auxiliary devices at chain to chain transfers to be described.

The leg portion 86 of the retractable dog 84 is disposed between a front force guide roll 90 and a rear force guide roll to prevent longitudinal movement thereof. The guide roll 90 is rotatably secured to the trolley body 56 by a pin 91. It should be appreciated that any suitable means may be used to rotatably secure guide roll 90 to the trolley body 56 to resist the retractable dog 84 from sticking in a retracted position.

The free trolley 54 further includes an actuating lever 92 rotatably secured by a fastener 94 to a lower portion of the leg portion 86. The free trolley 54 includes a pair of side plates 96 secured to the trolley body 56 by fasteners 98. The actuating lever 92 is rotatably secured between the side plates 96 by suitable means such as a fastener 102. It should be appreciated that, when the actuating lever 92 is moved upwardly, the leg portion 86 moves downwardly to cause the retractable dog 84 to be retracted.

The free trolley 54 also includes a holdback dog 104 rotatably secured between the projections 58 by suitable means such as a fastener 105. The holdback dog 104 has a dog portion 106 which may engage the chain pusher dog 106 to be described. The holdback dog 104 also has an actuated flange 107 which may be engaged by a corresponding actuator flange 108 of the leg portion 86 of the retractable dog 84 to rotate the holdback dog 104. The holdback dog 104 also has a cam surface 109 for engagement with a cam down bar 132 to be described to rotate the dog portion 106 downwardly. It should be appreciated that the retractable dog 84 and holdback dog 104 resist the chain pusher dog 106 from disengaging the free trolley 54.

The power and free conveying system 10 includes at least one, preferably a plurality of power trolleys, generally indicated at 110, for movement along the track assembly 26. The power trolley 110 includes a first power trolley support 112 having a first power trolley wheel 114 rotatably secured to an upper portion thereof by suitable means such as a pin 116. The first power trolley wheel 114 has a flat face to engage the track surface 37 of the first power track member 36. The power trolley 110 also includes a second power trolley support 118 spaced transversely from the first power trolley support 112 and having a second power trolley wheel 120 rotatably secured to an upper portion thereof by suitable means such as a pin 116. The second power trolley wheel 120 has a flat face to engage the track surface 45 of the second power track member 44.

The power trolley 110 also includes a chain 122 for engaging the power trolley supports 112,118. The power trolley supports 112,118 extend through the chain 122 and are secured to each other by suitable means such as fasteners 124 above and below the chain 122. The power trolley 110 also includes a chain dog pusher 126 disposed between a pair of power trolley supports 112,118 and secured to the chain 122 by suitable means such as fasteners 128. The chain dog pusher 126 engages the retractable dog 84 to move the free trolley 54 along the track assembly 26. It should be appreciated that the chain 122 is attached to a power source (not shown) to move the chain 122 along the track assembly 26.

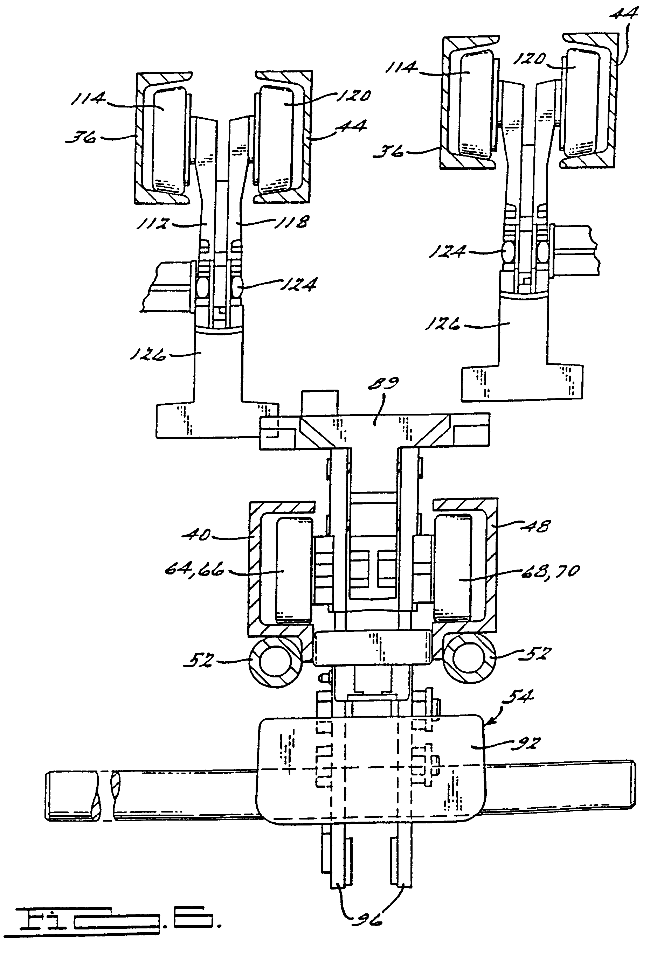

Referring to FIG. 5, the power and free conveying system 10 may include at least one, preferably a pair of traction wheels 130 at a curved section of the track assembly 26. As illustrated, the traction wheels 130 are disposed along opposed curved sections of the power track to transfer the free trolley 54 from one power track to the other. As illustrated in FIG. 6, the wipe out power trolley 110 has the chain pusher dog 126 engaging the retractable dog 84 of the free trolley 54. As the chain 122 of the wipe out power trolley 110 moves in the direction indicated by the arrow A in FIG. 5, the cam surface 87 of the retractable dog 84 engages a cam down bar 132 disposed along the curved section of the wipe out power track and the retractable dog 84 moves downwardly or retracts. As this occurs, the chain pusher dog 126 of the wipe out power trolley 110 disengages the free trolley 54 and moves along the traction wheel 130. As illustrated in FIG. 7, the wipe in power trolley 110 moves along the other traction wheel 130 and the cam down bar 132 ends to allow the retractable dog 84 to extend or move upwardly. The wipe in power trolley 110 has its chain pusher dog 126 engage the retractable dog 84 to move the free trolley 54 along the free tracks 40,48. It should be appreciated that FIGS. 5 through 7 illustrate a typical chain to chain transfer. It should also be appreciated that the traction wheels 130 may have teeth on a circumference thereof to engage the chain 122.

Referring to FIGS. 8 and 9, a pair of free trolleys 54 and 54' are illustrated before engagement on the power and free conveying system 10. A first free trolley 54 is shown with a king pin 140 to attach a load to the side plates 96. The king pin 140 is conventional and known in the art. A second free trolley 54' lacks a retractable dog and holddown dog. The second free trolley 54' also has a cam actuator 142 secured between and to the side plates 96 by suitable means such as fasteners 144. The cam actuator 142 has a cam portion 146 extending downwardly at an angle to contact the actuating lever 92 and a longitudinal rest portion 148 as illustrated in FIG. 8. As the power trolley 110 moves in a direction of travel as indicated by the arrow A, the actuating lever 92 moves upwardly along the cam portion 146 of the cam actuator 142. As this occurs, the actuating lever 92 rotates to pull down or retract the retractable dog 84. The flange 108 of the retractable dog 84 engages the flange 107 of the holdback dog 104 to rotate the dog portion 106 downwardly. Once the actuating lever 92 reaches the rest portion 148 of the cam actuator 142 as illustrated in FIG. 9, the retractable dog 84 and holdback dog 104 have retracted sufficiently to disengage completely the chain pusher dog 126. It should be appreciated that the cam actuator 142, retractable dog 84 and holdback dog 104 are optional features for the free trolley 54.

Accordingly, the free trolley 54 has increased dog bite for more positive engagement with the chain 122, and more positive transfers due to improved design of wide front trolley dog, chain dog and method of transferring. The free trolley 54 has a longer wheel base for improved trolley stability and rollers 90 for guiding the retractable dog 84 to resist the retractable dog 84 from sticking down, causing missed transfers.

The present invention has been described in an illustrative manner. It is to be understood that the terminology which has been used is intended to be in the nature of words of description rather than of limitation.

## Claims

1. A power and free conveying system (20) comprising:
a track assembly including a power track (36,44) and a free track (40,48) vertically spaced from said power track;
a power trolley (110) supported on said power track for movement therealong; and
a free trolley (54) supported on said free track for movement therealong;
characterised in that said track assembly includes;
a C-shaped first side support member (32) having an upper transverse end connected to a first power track C-shaped member (36) and a lower transverse end connected to a first free track C-shaped member (40);
a C-shaped second side support member (34) opposite and spaced from said first side support member having an upper transverse end connected to a second power track C-shaped member (44) and a lower transverse end connected to a second free track C-shaped member (48); and
a torsionally stiff tubular guard support member (30) secured to and connecting said first and second side support members (32,34) at the upper ends of the first and second support members;
the power track formed by the said power track members (36,44) having a transverse width less than the free track formed by the said free track members (40,48); and
the power track members and the free track members (36,40,44,48) having rails of a common form.

2. A power and free conveying system as claimed in claim 1, wherein said guard support member (30) has a generally rectangular tubular shape.

3. A power and free conveying system as claimed in claim 1 or 2 wherein said first and second track members (36,40,44,48) each have planar and parallel interior lower surfaces to be engaged by said trolleys.

4. A power and free conveying system as claimed in any one of the preceding claims including track yokes (28) positioned diagonally between said power track and said free track to form a truss.

5. A power and free conveying system as claimed in any one of the preceding claims including splicing members (52) for connecting either one of a pair of first track members (36,44) and a pair of second track members (40,48) together.

6. A power and free conveying system as claimed in any one of the preceding claims, wherein said power track and said free track members (36,40,44,48) each comprise a downstanding flange (38, 42,46,50) at a transverse end of a lower portion thereof.

7. A power and free conveying system as claimed in claim 6, wherein said free trolley (54) includes a pair of side rollers (76,78) rotatably attached to a trolley body (56) and engageable with said downstanding flange of said track members (36,40,44,48).

8. A power and free conveying system according to any one of the preceding claims wherein,
said free trolley (54) includes a moveable holdback dog (104) engageable and disengageable with said power trolley; and
said free trolley includes a retractable dog (84) having a first position engageable with said power trolley (110) and a second position disengageable with said power trolley and engageable with said holdback dog (104) to completely disengage said free trolley (54) from said power trolley upon engaging another one of said free trolley.

9. A power and free conveying system as claimed in claim 8, wherein said free trolley (54) comprises a trolley body (56) having forward and rear free trolley wheels (64,66,68,70) rotatably secured to each transverse side of said trolley body for engaging said free track.

10. A power and free conveying system as claimed in claim 9, wherein said forward and rear free trolley wheels (64,66,68,70) have a flat face.

11. A power and free conveying system as claimed in claim 8, 9 or 10, wherein said retractable dog (84) has a leg portion (86) extending downwardly through said trolley body and a dog portion (89) to engage said power trolley.

12. A power and free conveying system as claimed in claim 11, wherein said retractable dog (84) has cam face (87) extending transversely and inclined.

13. A power and free conveying system as claimed in claim 11 or 12, wherein said trolley body (56) includes a guide roll (90) disposed on each longitudinal side of said leg portion (86) to resist longitudinal movement thereof relative to said trolley body.

14. A power and free conveying system as claimed in claim 11, 12 or 13, including an actuator lever (92) rotatably secured to a lower portion of said leg portion (86) and said trolley body (56).

15. A power and free conveying system as claimed in claim 11, 12, 13 or 14, wherein said holdback dog (104) is pivotally mounted to said trolley body (56) and has a flange (107) extending outwardly, said retractable dog (84) having a flange (108) extending outwardly from said leg portion (86) and being engageable and disengageable with said flange (107) of said holdback dog (104).

16. A power and free conveying system as claimed in any one of the preceding claims, wherein said power trolley (110) comprises a chain (122), a pair of support members (112,118) attached to said chain, a wheel (114,120) attached to one end of each said support member and engageable with said power track, and a chain pusher dog (126) disposed between said support member and attached to said chain (122) and extending downwardly for engagement with said free trolley (54).

## Patentansprüche

1. Ein Antriebs- und freies Fördersystem (20) bestehend aus:
einer Spurenvorrichtung mit einer Antriebsspur (36, 44) und einer freien Spur (40, 48), die senkrecht von der besagten Antriebsspur entfernt ist;
einem Antriebsförderwagen (110), der von der besagten Antriebsspur getragen wird, um sich auf ihr entlang zu bewegen und
einem freien Förderwagen (54), der von der besagten freien Spur getragen wird, um sich auf ihr entlang zu bewegen;
dadurch gekennzeichnet dass die besagte Spurenvorrichtung enthält:
ein erstes, C-förmiges seitliches Stützglied (32) mit einem oberen Querende, das mit einem ersten C-förmigen Antriebsspurenglied (36) verbunden ist und ein unteres Querende, das mit einem ersten freien C-förmigen Spurenglied (40) verbunden ist;
ein zweites, C-förmiges seitliches Stützglied (34), das gegenüber vom besagten ersten seitlichen Stützglied liegt und von ihm entfernt ist, mit einem oberen Querende, das mit einem zweiten, C-förmigen Antriebsspurenglied (44) verbunden ist und einem unteren Querende, das mit einem zweiten, freien C-förmigen Spurenglied (48) verbunden ist und
ein verdrehfestes rohrförmiges Führungsstützglied (30), das das besagte erste und zweite seitliche Stützglied (32, 34) an den oberen Enden des ersten und zweiten Stützglieds verbindet und daran befestigt ist;
wobei die Antriebsspur, die durch die besagten Antriebsspurenglieder (36, 44) gebildet wird, eine Querbreite hat, die geringer ist als die freie Spur, die von den besagten freien Spurengliedern (40, 48) gebildet wird und den Antriebsspurengliedern und den freien Spurengliedern (36, 40, 44, 48), die Schienen eine gemeinsame Form haben.

2. Ein Antriebs- und freies Fördersystem nach Anspruch 1, in dem das besagte Führungsstützglied (30) eine im allgemeinen rechteckige, rohrförmige Form hat.

3. Ein Antriebs- und freies Fördersystem nach Anspruch 1 oder 2, in dem das besagte erste und zweite Spurenglied (36, 40, 44, 48) jeweils flache und parallele untere Innenflächen hat, die von den besagten Förderwagen eingerückt werden sollen.

4. Ein Antriebs- und freies Fördersystem nach irgendeinem der vorhergehenden Ansprüche, das Spurstreben (28) enthält, die diagonal zwischen der besagten Antriebsspur und der besagten freien Spur angebracht sind, um eine Verstärkung zu bilden.

5. Ein Antriebs- und freies Fördersystem nach irgendeinem der vorhergehenden Ansprüche mit Spliessgliedern (52) zur Verbindung jedes Paars erster Spurenglieder (36, 44) und eines Paars zweiter Spurenglieder (40, 48) miteinander.

6. Ein Antriebs- und freies Fördersystem nach irgendeinem der vorhergehenden Ansprüche, in dem die besagte Antriebsspur und die besagten Spurenglieder (36, 40, 44, 48) jeweils einen nach unten gerichteten Flansch (38, 42, 46, 50) an einem Querende ihres unteren Abschnitts haben.

7. Ein Antriebs- und freies Fördersystem nach Anspruch 6, in dem der besagte freie Förderwagen (54) zwei Seitenrollen (76, 78) enthalt, die rotierbar an einem Förderwagenkörper (56) befestigt sind und mit dem besagten nach unten gerichteten Flansch der besagten Spurenglieder (36, 40, 44, 48) einrücken können.

8. Ein Antriebs- und freies Fördersystem nach irgendeinem der vorhergehenden Ansprüche, in dem
der besagte freie Förderwagen (54) eine bewegbare Zurückhalteklaue (104) enthält, die mit dem besagten Antriebsförderwagen ein- und ausrücken kann und
der besagte freie Förderwagen eine einziehbare Klaue (84) enthält mit einer ersten, mit dem besagten Antriebsförderwagen (110) einrückbaren Stellung und einer zweiten, mit dem besagten Antriebsförderwagen ausrückbaren Stellung und die mit der besagten Zurückhalteklaue (104) einrücken kann, um den besagten freien Förderwagen (54) vollständig vom besagten Antriebsförderwagen auszurücken, indem ein anderer besagter freier Förderwagen eingerückt wird.

9. Ein Antriebs- und freies Fördersystem nach Anspruch 8, in dem der besagte freie Förderwagen (54) einen Förderwagenkörper (56) enthält, der freie Förderwagen-Vorder- und Hinterräder (64, 66, 68, 70) hat, die rotierbar an jeder Querseite des besagten Förderwagenkörpers befestigt sind, um die besagte freie Spur einzurücken.

10. Ein Antriebs- und freies Fördersystem nach Anspruch 9, in dem die besagten freien Förderwagen-Vorder und Hinterräder (64, 66, 68, 70) eine flache Fläche haben.

11. Ein Antriebs- und freies Fördersystem nach Anspruch 8, 9 oder 10, in dem die besagte einziehbare Klaue (84) einen Schenkelabschnitt (86) hat, der sich nach unten durch den besagten Förderwagenkörper und einen Klauenabschnitt (89) erstreckt, um den besagten Antriebsförderwagen einzurücken.

12. Ein Antriebs- und freies Fördersystem nach Anspruch 11, in dem die besagte einziehbare Klaue (84) eine Nockenfläche (87) hat, die sich quer erstreckt und geneigt ist.

13. Ein Antriebs- und freies Fördersystem nach Anspruch 11 oder 12, in dem der besagte Förderwagenkörper (56) eine Führungsrolle (90) enthält, die auf jeder Längsseite des besagten Schenkelabschnitts (86) angebracht ist, um dessen Längsbewegung im Verhältnis zum besagten Förderwagenkörper zu widerstehen.

14. Ein Antriebs- und freies Fördersystem nach Anspruch 11, 12 oder 13 mit einem Betätigungshebel (92), der rotierbar an einem unteren Abschnitt des besagten Schenkelabschnitts (86) und des besagten Förderwagenkörpers (56) befestigt ist.

15. Ein Antriebs- und freies Fördersystem nach Anspruch 11, 12, 13 oder 14, in dem die besagte Zurückhalteklaue (104) ausschwenkbar am besagten Förderwagenkörper (56) montiert ist und einen Flansch (107) hat, der sich nach aussen erstreckt, wobei die einziehbare Klaue (84) einen Flansch (108) hat, der sich nach aussen von dem besagten Schenkelabschnitt (86) erstreckt und mit dem besagten Flansch (107) der besagten Zurückhalteklaue (104) ein- und ausrückbar ist.

16. Ein Antriebs- und freies Fördersystem nach irgendeinem der vorhergehenden Ansprüche, in dem der besagte Antriebsförderwagen (110) eine Kette (122), zwei Stützglieder (112, 118) enthält, die an der besagten Kette befestigt sind, ein Rad (114, 120), das an einem Ende jedes besagten Stützglieds befestigt ist und mit der besagten Antriebsspur einrückbar ist und eine Kettenschubklaue (126), die zwischen dem besagten Stützglied angebracht und an der besagten Kette (122) befestigt ist und sich nach unten erstreckt, um mit dem besagten freien Förderwagen (54) einzurücken.

## Revendications

1. Système de convoyeur à voie mécanisée dit "power and free" (entraîné et libre) (20) comprenant :
un ensemble de pistes comprenant une piste mécanisée (36, 44) et une piste de roulement libre (40, 48) espacée verticalement de ladite piste mécanisée,
un trolley moteur (110) supporté sur ladite piste mécanisée afin de se déplacer le long de celle-ci, et
un trolley libre (54) supporté sur ladite piste de roulement libre afin de se déplacer le long de celle-ci,
caractérisé en ce que ledit ensemble de pistes comprend
un premier élément de support latéral en forme de C (32) présentant une extrémité transversale supérieure reliée à un premier élément en forme de C de piste mécanisée (36) et une extrémité transversale inférieure reliée à un premier élément en forme de C de piste de roulement libre (40),
un second élément de support latéral en forme de C (34) à l'opposé et espacé dudit premier élément de support latéral, présentant une extrémité transversale supérieure reliée à un second élément en forme de C de piste mécanisée (44) et une extrémité transversale inférieure reliée à un second élément en forme de C de piste de roulement libre (48), et
un élément de support et de renfort, tubulaire, rigide en torsion (30) fixé auxdits premier et second éléments latéraux de support (32, 34) et les reliant au niveau des extrémités supérieures des premier et second éléments de support,
la piste mécanisée formée par lesdits éléments de piste mécanisée (36, 44) présentant une largeur transversale plus faible que la piste de roulement libre formée par lesdits éléments de piste de roulement libre (40, 48), et
les éléments de piste mécanisée et les éléments de piste de roulement libre (36, 40, 44, 48) comportant des rails d'une forme commune.

2. Système de convoyeur "power and free" selon la revendication 1, dans lequel ledit élément de support et de protection (30) présente une forme tubulaire généralement rectangulaire.

3. Système de convoyeur "power and free" selon la revendication 1 ou 2, dans lequel lesdits premiers et seconds éléments de piste (36, 40, 44, 48) présentent chacun des surfaces inférieures intérieures planes et parallèles destinées à venir en contact avec lesdits trolleys.

4. Système de convoyeur "power and free" selon l'une quelconque des revendications précédentes, comprenant des contrefiches de pistes (28) positionnées en diagonale entre ladite piste mécanisée et ladite piste de roulement libre afin de former une poutre à contrefiches.

5. Système de convoyeur "power and free" selon l'une quelconque des revendications précédentes, comprenant des éléments de raccordement (52) destinés à relier l'une ou l'autre d'une paire de premiers éléments de piste (36, 44) et d'une paire de seconds éléments de piste (40, 48) ensemble.

6. Système de convoyeur "power and free" selon l'une quelconque des revendications précédentes, dans lequel lesdits éléments de piste mécanisée et de piste de roulement libre (36, 40, 44, 48) comprennent chacun un rebord s'étendant vers le bas (38, 42, 46, 50) au niveau d'une extrémité transversale d'une partie inférieure de ceux-ci.

7. Système de convoyeur "power and free" selon la revendication 6, dans lequel ledit trolley libre (54) comprend une paire de galets latéraux (76, 78) fixés avec possibilité de rotation à un corps de trolley (56) et pouvant venir en contact avec ledit rebord orienté vers le bas desdits éléments de piste (36, 40, 44, 48).

8. Système de convoyeur "power and free" selon l'une quelconque des revendications précédentes, dans lequel
ledit trolley libre (54) comprend un toc d'accrochage mobile (104) pouvant être accroché audit trolley moteur et en être décroché, et
ledit trolley libre comprend un toc rétractable (84) présentant une première position pouvant venir en contact avec ledit trolley moteur (110) et une seconde position pouvant être détachée dudit trolley moteur et être amenée en contact avec ledit toc d'accrochage (104) afin de décrocher complètement ledit trolley libre (54) dudit trolley moteur lors de sa venue en prise avec un autre desdits trolleys libres.

9. Système de convoyeur "power and free" selon la revendication 8, dans lequel ledit trolley libre (54) comprend un corps de trolley (56) comportant des roues de trolley libre avant et arrière (64, 66, 68, 70) fixées avec possibilité de rotation à chaque face transversale dudit corps de trolley afin de venir en contact avec ladite piste de roulement libre.

10. Système de convoyeur "power and free" selon la revendication 9, dans lequel lesdites roues de trolley libre avant et arrière (64, 66, 68, 70) présentent une face plate.

11. Système de convoyeur "power and free" selon la revendication 8, 9 ou 10, dans lequel ledit toc rétractable (84) comporte une partie de patte (86) s'étendant vers le bas au travers dudit corps de trolley et une partie de toc (89) destinée à venir en prise avec ledit trolley moteur.

12. Système de convoyeur "power and free" selon la revendication 11, dans lequel ledit toc rétractable (84) comporte une face de came (87) s'étendant de façon transversale et en orientation inclinée.

13. Système de convoyeur "power and free" selon la revendication 11 ou 12, dans lequel ledit corps de trolley (56) comprend un galet de guidage (90) disposé sur chaque face longitudinale de ladite partie de patte (86) afin de s'opposer à un déplacement longitudinal de celle-ci relativement audit corps de trolley.

14. Système de convoyeur "power and free" selon la revendication 11, 12 ou 13, comprenant un levier d'actionneur (92) fixé avec possibilité de rotation à une partie inférieure de ladite partie de patte (86) et dudit corps de trolley (56).

15. Système de convoyeur "power and free" selon la revendication 11, 12, 13 ou 14, dans lequel ledit toc d'accrochage (104) est monté de façon pivotante sur ledit corps de trolley (56) et présente un rebord (107) s'étendant vers l'extérieur, ledit toc rétractable (84) comportant un rebord (108) s'étendant vers l'extérieur à partir de ladite partie de patte (86) et pouvant venir en prise et être mis hors de prise avec ledit rebord (107) dudit toc d'accrochage (104).

16. Système de convoyeur "power and free" selon l'une quelconque des revendications précédentes, dans lequel ledit trolley moteur (110) comprend une chaîne (122), une paire d'éléments de support (112, 118) fixés à ladite chaîne, une roue (114, 120) fixée à une première extrémité de chaque dit élément de support et pouvant venir en contact avec ladite piste mécanisée, et un toc poussé par chaîne (126) disposé entre ledit élément de support et fixé à ladite chaîne (122) et s'étendant vers le bas afin de venir en prise avec ledit trolley libre (54).
